Europäisches Patentamt

(19) European Patent Office

Office européen des brevets

(11) Publication number: **0 114 432**
**A2**

# (12) EUROPEAN PATENT APPLICATION

(21) Application number: **83201774.3**

(22) Date of filing: **14.12.83**

(51) Int. Cl.³: **G 01 M 13/04**

(30) Priority: **27.12.82 NL 8204995**

(43) Date of publication of application:
**01.08.84 Bulletin 84/31**

(84) Designated Contracting States:
**DE FR GB IT NL SE**

(71) Applicant: **SKF Industrial Trading & Development Company B.V.**
**Kelvinbaan 16 P.O. Box 50**
**NL-3430 AB Nieuwegein(NL)**

(72) Inventor: **Vermeiren, Karel Nathalis**
**Jasmijnlaan 7**
**Woerden(NL)**

(74) Representative: **Merkelbach, B.**
**SKF Engineering & Research Centre B.V. Kelvinbaan 16**
**P.O. Box 50**
**NL-3430 AB Nieuwegein(NL)**

(54) **Device for detecting a faulty condition in surfaces lubricated by a lubricant and rolling or sliding relatively to one another.**

(57) The claimed detection system is particularly suitable for controlling the working conditions between rolling elements e.g. in a bearing or such arrangement for which a prematurely information concerning defects or defaults which are developing is of importance i.e. information sufficiently in time before failures become unacceptable.

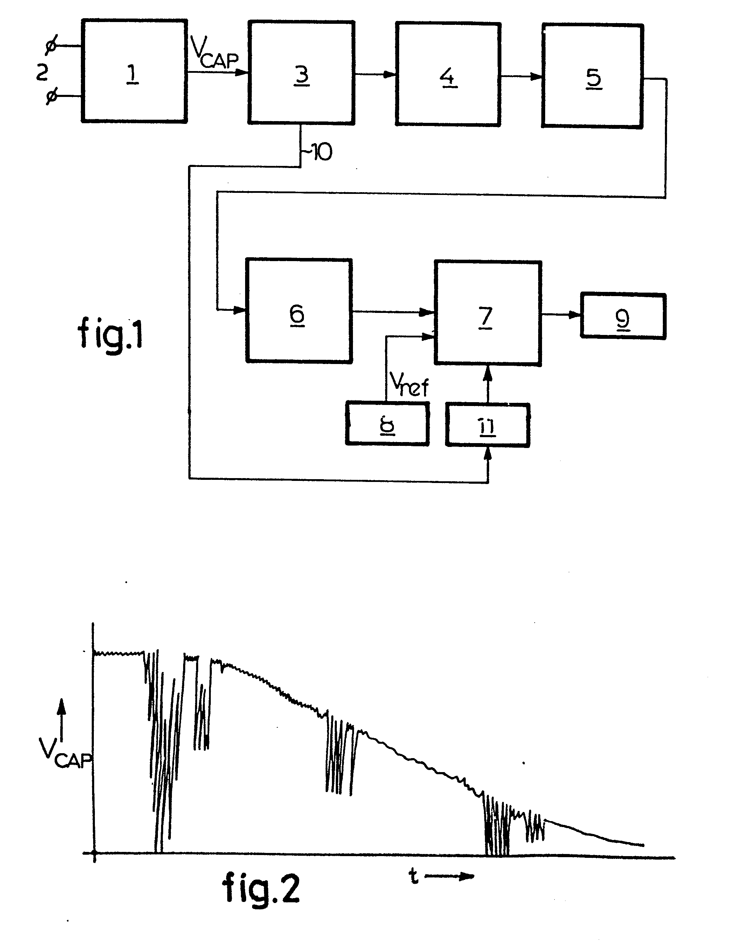

The system (Figure 1) comprises a unit (1) which in- and output are connected to the inner- and outer bearing race-rings resp. The unit (1) produces the signal $V_{CAP}$ (Figure 2). Amplifier (3) is connected to unit (1) which is provided with a band-filter (4). To band-filter (4) an AC-DC transducer (5) with integrator (6) is linked. To comparator (7) integrator (6), adjuster (8) and a detector (1) are connected. Detector (4) is also linked to amplifier (3) due to which in case an unacceptable default is detected alarming device (9) immediately being activated.

fig.1

Device for detecting a faulty condition in surfaces lubricated by a lubricant and rolling or sliding relatively to one another.

The invention relates to a device for detecting a faulty condition in surfaces lubricated by a lubricant and rolling or sliding relatively to one another, provided with a unit for generating a signal dependent upon the capacitive impedance between the surfaces.

In a known device of this sort there are derived from the said signal output signals which form a measure for the thickness of the film of lubricant between the surfaces and for the percentage of contact time in a given measuring interval. Although this known device has the advantage that particularly accurate measurements are obtained, the known device is quite complicated and the manufacturing costs are high. Furthermore, when a faulty condition occurs an alarm signal can only be emitted if the thickness of the film of lubricant falls below a minimum permissible value or if the percentage of contact time becomes too great. In practice, the quality of the lubricant and the trueness of the surfaces rolling or sliding relatively to one another decline even before the thickness of the film of lubricant becomes impermissibly small or the percentage of contact time becomes impermissibly great. In certain cases it is desirable be able to determine such circumstances at an already very early stage.

The object of the invention is to procure a device of the sort mentioned at the beginning, by which any possible faulty condition may be determined at an already very early stage.

To this end the device pursuant to the invention is characterized by an alternating current-direct current converter which converts the alternating-current component of the said signal into a direct-current signal and an integrator which integrates the direct-current signal over a fixed integration period displaced in time, the output of the integrator being connected to one input of a comparator, the other input of which receives a reference value characterizing the faulty condition to be detected and the output of which emits an alarm signal when the reference value is exceeded.

In this way there is obtained a device which, by means of the alternating current component in the signal dependent upon the capacitive impedance between the surfaces, is capable of detecting a faulty condition in an already very early stage and on the occurrence thereof is capable of emitting an alarm signal, inasmuch as now even faulty conditions which result in no contacts between the surface, but do cause the alternating-current component of the signal to increase, are detected. This alternating-current component of the signal, dependent upon the capacitive impedance between the surfaces, is determined by the presence of particles in the lubricant between the surfaces rolling or sliding relatively to one another. These particles may or may not be conducting. Conducting particles may come from the outside or may be caused by wear or breaking off (spalling) from a surface defect or a "subsurface defect" appearing on the surface.

These metal particles may be present in the lubricant between the surfaces or may have become joined with one of these surfaces by cold rolling. It appears from this that variations in the surface roughness may be caused by spalling from the surfaces and by particles being rolled on. In addition, hard non-conducting particles, such as, for example, grains of sand, may impress shapes into the surfaces, so that a change is produced in the roughness of the surface.

The increase in surface roughness results in an increase of the alternating-current component of the signal dependent upon the capacitive impedance between the surfaces. If the total alternating-current component within the integration period of the integrator exceeds the reference value, the comparator delivers an alarm signal which may, for example, activate an alarm element. The device pursuant to the invention is thus, for example, especially suitable for detecting a faulty condition in bearings which are tested in a machine for testing the service life of bearings or the like.

The invention is explained in greater detail below with the aid of the drawing, wherein an example of the means pursuant to the invention is represented and where

Fig. 1 is a block diagram of an embodiment of the device pursuant to the invention.

Fig. 2 is a diagram wherein is represented an example of a signal which is dependent upon the capacitive impedance between surfaces lubricated by a lubricant and rolling or sliding relatively to one another.

In Fig. 1 is represented a block diagram of a device for detecting a faulty condition in surfaces lubricated by a lubricant and rolling or sliding relatively to one another, for example, a ball bearing. For this purpose the device is provided with a unit 1, the inputs 2 of which may be connected, for example, with the inner and outer races of the ball bearing. At its output the unit 1 delivers a signal $V_{CAP}$, which is dependent upon the capacitive impedance between the inner and outer races. The delivered signal $V_{CAP}$ is represented in Fig. 2. As appears there, the signal $V_{CAP}$ comprises a direct-current component and an alternating-current component. The direct-current component of the signal $V_{CAP}$ forms a measure for the thickness of the film of lubricant, which decreases but slowly in the course of time. The alternating-current component is caused by roughness of the surfaces moving relatively to one another and particles present in the lubricant. A variation in the roughness of the surfaces, such as, for example, of the races in a ball bearing, may be produced by spalling, the adhesion of particles on these surfaces or the formation of impressions in these surfaces by hard particles, such as, for example, grains of sand.

The development of defects in the surfaces moving relatively to one another may be deduced from the alternating-current component of the signal $V_{CAP}$ at an already very early stage by evaluating the total alternating-current component within a given period. If the alternating-current component within this period is greater than a predetermined value, this indicates defects in the surfaces moving relatively to one another or a decline in the quality of the lubricant, for example, as a result of the presence of particles in the lubricant.

Since the amplitude of the alternating-current component is dependent upon the level of direct current, the signal $V_{CAP}$ is supplied to the input of an amplifier 3 having adjustable amplification, while the amplification factor of the amplifier 3 is adjusted such that the signal appearing at the output thereof is held at an approximately constant direct-current level. The signal is then supplied to a band-pass filter 4 transmitting only the frequency range of 1-10 kHz, since the frequency of the alternating-current component of interest lies in this frequency range.

The output signal of the band-pass filter 4 is supplied to an alternating current-direct current converter 5, which converts the alternating-current component of the signal $V_{CAP}$ into a direct-current signal proportional thereto. The direct-current signal is supplied to an integrator 6, which integrates the direct-current signal over a fixed integration period $\Delta T$. The integration period $\Delta T$ is here continuously or stepwise displaced in time. At the output of the integrator 6 a signal therefore appears, the magnitude of which is dependent upon the total alternating current component within the integration period $\Delta T$. This signal is supplied to one input of a comparator 7, the other input of which receives a reference voltage $V_{ref}$, which is delivered by a setting element 8.

As soon as the output signal of the integrator 6 exceeds the reference voltage $V_{ref}$, the comparator 7 delivers an output signal to an alarm element 9, whereby the faulty condition is signalled.

The amplifier 3 in addition has a second output 10, which emits a signal dependent upon the magnitude of the amplification factor. The output 10 is connected to a detector 11 which inactivates the comparator 7 when the amplification factor has exceeded a predetermined value. In that case the thickness of the film of lubricant between the surfaces moving relatively to one another has such a minimum value that alarm by the alarm element 9 is not necessary, since attainment of the minimum value has already resulted in such a condition that good function of the bearing or the like is no longer possible.

The device described may be advantageously applied in those cases in which a very early alarm upon the occurrence of defects in the surfaces moving relatively to one another or a deterioration in the quality of the lubricant is necessary. The device may, for example, be used for detecting defects in ball bearings and the like which are being tested for service life. The device may alternatively be employed as a sensor for automating renewal of the lubricant used.

Another application of the device pursuant to the invention is the detection of a defect in grinding shafts operating at high speed. The quality of grinding is determined by the stable rotation of the grinding shaft, where only very slight vibrations must occur. Since stable running is in large measure determined by the lubrication and the condition of the grinding-shaft bearing, the device pursuant to the invention is especially suitable for monitoring these bearings.

The invention is not limited to the embodiment described above, which may be varied in different ways within the framework of the invention.

- 1 -                                        0114432

## Claims

1. Device for detecting a faulty condition in surfaces lubricated by a lubricant and rolling or sliding relatively to one another, provided with a unit for generating a signal dependent upon the capacitive impedance between the surfaces, characterized by an alternating-current–direct current converter which converts the alternating-current component of the said signal into a direct-current signal and an integrator which integrates the direct-current signal over a fixed integration period displaced in time, the output of the integrator being connected to one input of a comparator, the other output of which receives a reference value characterizing the faulty condition to be detected and the output of which emits an alarm signal when the reference value is xceeded

2. Device according to claim 1, characterized in that the said unit is connected to the input of an amplifier having adjustable amplification, the amplification factor of which is adjusted such that the signal dependent upon the capacitive impedance and appearing at the output of the amplifier is held at an approximately constant direct-current level.

3. Device according to claim 3, characterized in that the amplifier has a second output which delivers a signal indicating the magnitude of the amplification factor, which output is connected to a detector capable of disconnecting the comparator.

4. Device according to claims 1, 2 or 3, characterized in that the signal dependent upon the capacitive impedance is supplied to the alternating-current–direct current converter via a band-pass filter.

5. Device according to any of the foregoing claims, characterized in that the reference value delivered to the comparator is adjustable.

1/1

0114432

fig.1

fig.2